Europäisches Patentamt

European Patent Office

Office européen des brevets

(19)

(11) Publication number: **0 218 748**

**A1**

(12)

# EUROPEAN PATENT APPLICATION

(21) Application number: **85113115.1**

(22) Date of filing: **16.10.85**

(51) Int. Cl.⁴: **H04N 7/01**

(43) Date of publication of application:
**22.04.87 Bulletin 87/17**

(84) Designated Contracting States:
**CH DE FR GB IT LI NL SE**

(71) Applicant: **Iwasaki Engineering Co., Ltd.**
**13-3, Hiratsuka-cho Shimotoba**
**Fushimi-ku Kyoto(JP)**

(72) Inventor: **Takahashi, Norio Iwasaki**
**Engineering Co., Ltd.**
**13-3, Hiratsuka-cho Shimotoba**
**Fushimi-ku Kyoto(JP)**
Inventor: **Nakano, Kazuhiko Iwasaki**
**Engineering Co., Ltd.**
**13-3, Hiratsuka-cho Shimotoba**
**Fushimi-ku Kyoto(JP)**

(74) Representative: **Goddar, Heinz J., Dr. et al**
**FORRESTER & BOEHMERT**
**Widenmayerstrasse 4/1**
**D-8000 München 22(DE)**

(54) **Image storage device.**

(57) An image storage device comprising an A/D converter (2) for converting an analog image signal transmitted from a high resolution TV camera (1) into a digital image signal to be stored, a D/A converter (8) to which the stored digital image signal is output after being read out and by which the output digital image signal is converted to an analog image signal to be output to a TV monitor (9), the device having a plurality of memories (4, 5) for storing a digital signal input as a high resolution image and converted by A/D converter (2) in parallel in time series, a controller (6) for controlling the image signal stored in each memory corresponding to the frame frequency of a receiver to be used at a time lag of one frame, and a selector (7) for outputting the digital image signal read out of each memory (4, 5) to the D/A converter (8) by selecting the image depending on the select signal of said controller (6).

FIG. 1

## Image Storage Device

## BACKGROUND OF THE INVENTION

### 1. Field of the Invention:

The present invention relates to an image storage device for recording a digital image signal and more particularly to an image storage device for storing an image of high resolution.

### 2. Prior Art

Hitherto, in order to obtain a high resolution image, i.g., an image of 1024 x 1024 in an digital image system for medical use, industrial use and the like, an image input of 15 frames/sec. is used and this image input is directly projected on a TV monitor. Accordingly, in case of displaying a TV image at $15H_z$ non-interlace, it is impossible to obtain an image of high quality due to flicker or image or decline of S/N ratio and the like. Therefore it is conventional to use a TV monitor of high after-image in order to obtain an image without flicker, which however is not suitable for practical use since a visibility of image is declined thereby.

Since the TV image is usually displayed at 30 frames/sec., it may be possible to increase the frame number of TV camera in order to obtain a high quality image, however, such idea is not recommendable because of cost increase in the image system as a whole.

Under such circumstances, it is increasingly demanded to obtain the high resolution image of excellent quality by using the conventional TV camera.

## SUMMARY OF THE INVENTION

Accordingly, it is an object of the present invention to provide a novel image storage device by which a high resolution image without flicker and of desirable S/N ratio can be reproduced by using conventional TV camera without increasing the frame number of the TV camera, thereby overcoming the above-discussed disadvantages occurred in the obtention of high resolution image by the conventional TV camera.

In order to accomplish the foregoing object, the image storage device in accordance with the present invention is characterized by comprising a plurality of memories for writing digital signal to be inputted as a high resolution image and converted by A/D converter in parallel in time series, a controller for controlling the image signal written in each memory corresponding to a frame frequency of a receiver to be used at the time lag of one frame, and a selector for outputting the digital image signal read out of each memory to a D/A converter by selecting the image depending on select signal of said controller.

Since the image storage device in accordance with the present invention is arranged as above, an input of 15 frames/sec. can be read out as a digital image signal of 30 frames/sec. using a TV camera of conventional type, the image can be outputted by the TV monitor of 30 frames/sec. and the high resolution image without flicker and of desirable S/N ratio can be reproduced, thereby misreading of image information in medical or industrial use being greatly decreased. Furthermore, since the input can be treated at such low frequency as 15 frames/sec., the digitization of the image signal as well as image procession thereof becomes easy.

## BRIEF DESCRIPTION OF THE DRAWINGS

Other objects and advantageous features of the present invention will be seen in connection with the accompanying drawings wherein:

Fig. 1 is a block diagram showing an arrangement of the image storage device as an embodiment of the present invention;

Fig. 2 is an explanatory view for arranging an image scope by dividing the image input into 4 parts; and

Fig. 3 is a block diagram showing a modification in the arrangement of image scope shown in Fig. 2.

## DESCRIPTION OF THE PREFERRED EMBODIMENT

Referring now to the accompanying drawings an image storage device as an embodiment of the present invention is described in detail hereunder.

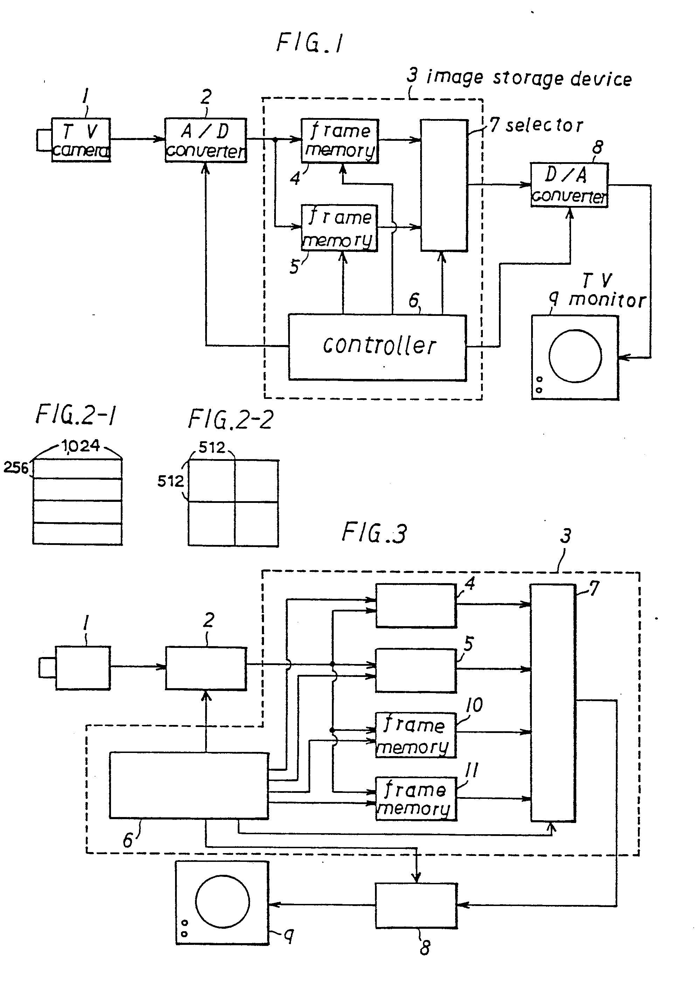

In Fig. 1 showing an arrangement of the image storage device, numeral (1) is a high resolution TV camera which outputs an analog image signal of 15 frames/sec. in frequency with 1024 horizontal scanning lines, and the image signal thus outputted is converted to a digital signal to be inputted to an image storage device (3). This image storage device (3) is composed of frame memories (4), (5), a controller (6) and a selector (7). Read out of the frame memories (4), (5) is carried out while the digital image signal from the A/D converter (2) being written therein. The controller (6) outputs a write signal to each frame memory or a read out signal therefrom and controls respective operations. In other words, the digital image signal which is outputted from the TV camera (1) at 15 frames/sec. converted by the A/D converter (2) is first written sequentially in the frame memory (4), then at the next frame being written in the frame memory (5) ready for the sequential time series storing. When the frame memory (5) is ready for being written, the digital image signal is simultaneously read out of the memory (4) at the cycle of 30 frames/sec.. In the same manner, when the frame memory (4) is ready for being written, the digital image signal is read out of the frame memory (5) at the cycle of 30 frames/sec.. The image signal for each frame alternately read out is outputted to D/A converter (8) being switched at the selector (7) for each of fed frame.

As described above, the controller (6) outputs the signal for writing and reading the digital image signal in and out of each frame memory and the signal for selecting the select signal to the selector (7), and also outputs such signals as data fetching signal, data read out signal to and from the A/D converter (2) and D/A converter (8), thus controlling each operation. The analog image signal converted by the D/A converter (8) is outputted to a TV monitor (9) of 30 frames/sec. of 1024 horizontal scanning lines so as to be reproduced as a high resolution image of 1024 x 1024.

As described above, even when the frame frequency of the TV camera is relatively lower than the frame frequency of the TV monitor, it is possible to arrange a satisfactory image processing system by providing a plurality of memories corresponding to the difference between these two frequencies so that the digital image signals sequentially written in are read out of each memory to be outputted at the time lag of one frame corresponding to the frame frequency of the TV monitor.

When using a TV camera of which frame frequency is high but the maximum number of picture elements thereof with respect to the high resolution image desired to obtain is less, an image may be satisfactorily arranged by fetching data several times as shown in Fig. 2-1 or 2-2 and providing a plurality of memories corresponding to the number of data fetching times as shown in Fig. 3. That is, Fig. 2-1 shows an image arranged by fetching the image data 4 times to obtain an image of 1024 x 1024 by means of a TV camera of which input is 60 $H_z$, 1024 x 256, while Fig. 2-1 shows the same image arrangement by means of a TV camera of which input is 60 $H_z$, 512 x 512. As shown in Fig. 3, four frame memories (4), (5), (10), (11) are disposed for the above described operation. In Fig. 3, like parts are designated the same reference numerals as Fig. 1. Thus, although the TV camera is of 60 $H_z$, by fetching the data four times to arrange one image, i.e., 60 $H_z$ ÷ 4 = 15 $H_z$ and by the same operation as the foregoing embodiment, it is possible to reproduce a high resolution image by means of the TV monitor of 30 frame/sec..

While the invention has been particularly shown and described with reference to preferred embodiments thereof, it will be understood by those skilled in the art that the foregoing and other changes in form and details can be made therein without departing from the spirit and scope of the invention.

## Claims

1. An image storage device, comprising a plurality of memories for storing an input digital image signal; means for controlling the writing of data to and reading of data from each memory such that successive frames of image data are stored in separate memories and data is read from each memory at a frame frequency of a receiving device; and selector means for supplying the data stored in a selected memory to a said receiving means so that the said frames of image data are supplied to the receiving device in a predetermined order.

2. An image device according to Claim 1, wherein analog-to-digital converter means are provided for converting an input analog image signal into an input digital image signal for storage in the memories.

3. An image device according to Claim 1 or 2, wherein digital-to-analog converter means are provided for converting a digital image signal read out from one of the memories into an analog image signal for supplying to a said receiving device.

4. An image storage device comprising analog to digital converter means for converting an analog image signal transmitted from a high resolution TV camera into a digital image signal, memory means for storing the digital image signal, and digital-to-analog converter means for converting a digital image signal read out from the memory means into an analog image signal to be output to a TV monitor, the image storage device being characterised by: the memory means comprising a plurality of memories for storing a digital image signal input as a high resolution analog image signal and converted by the analog-to-digital converter means in parallel in time series, controlling means for controlling the image signal to be written into each memory corresponding to a frame frequency of a receiving device to be used at a time lag of one frame, and a selector for outputting a digital image signal read out of each memory to the digital-to-analog converter means by selecting the digital image signal depending on a select signal supplied by the controlling means.

5. An image storage device according to any preceding claim, wherein the controlling means is arranged to control data to be read from the memories at a frequency corresponding to a frame frequency twice that of the input image signal.

6. An image storage device according to any preceding claim, wherein the controlling means is arranged to cause data to be read from one memory as data is written into the other or another memory.

7. An image storage device according to any preceding claim, wherein the control means is arranged to read each frame of the input digital signal stored in the memory means a number of times to enable an image signal of increased resolution to be provided.

8. An image storage device according to Claim 7 wherein the number of memories provided is equal to the number of times each frame of the input signal is to be read.

# FIG.1

3 image storage device

# FIG.2-1

# FIG.2-2

# FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 054 921 (TATAMI) <br> * column 2, line 13 - column 4, line 2; figure 2 * | 1-6 | H 04 N 7/01 |
| A | | 7,8 | |
| A | SMPTE JOURNAL, vol. 91, no. 9, September 1982, pages 797-807, Scarsdale, US.; J.H. HARSHBARGER: "Standardization of the television raster for non-broadcast applications" <br> * page 797, line 1 - page 799, line 4 * | 1,4 | |
| A | US-A-4 035 832 (STALLEY et al.) <br> * column 2, line 37 - column 4, line 4; figures 1, 2 * | 4-8 | |

TECHNICAL FIELDS SEARCHED (Int. Cl.4)

H 04 N 7/00
H 04 N 9/00
H 04 N 5/00

The present search report has been drawn up for all claims

| Place of search | Date of completion of the search | Examiner |
|---|---|---|
| BERLIN | 09-06-1986 | DUDLEY C. |